# EUROPÄISCHE PATENTANMELDUNG

(11) **EP 2 902 289 A2**
(43) Veröffentlichungstag der Anmeldung: **05.08.2015**
(21) Anmeldenummer: 14003343.2
(22) Anmeldetag: 27.09.2014
(51) Int. Cl.: B60W 30/00, B60W 30/14

(54) **Verfahren zum Optimieren eines Fahrbetriebs eines Kraftfahrzeugs**

(30) Priorität: 13.12.2013 DE 102013021011
(71) Anmelder: MAN Truck & Bus AG, 80995 München (DE)
(72) Erfinder: Kock, Peter, 85646 Anzing (DE); Weller, Ralf, 80638 München (DE)

(57) **Zusammenfassung**

Die Erfindung betrifft ein Verfahren zum Optimieren eines Fahrbetriebs eines Kraftfahrzeugs. Die Erfindung betrifft ferner ein Kraftfahrzeug mit einer Steuervorrichtung zur Bestimmung einer verbrauchsoptimierten Geschwindigkeitstrajektorie, die ausgebildet ist, das Verfahren durchzuführen und eine Benutzerschnittstelle zur Eingabe einer benutzerdefinierten Maximalgeschwindigkeit. Das Verfahren umfasst die folgenden Schritte: Festlegen einer Maximalgeschwindigkeit des Fahrzeugs mittels einer Eingabe über eine Benutzerschnittstelle; Bestimmen einer verbrauchsoptimierten Geschwindigkeitstrajektorie (2) entlang einer vorbestimmten Fahrtroute des Fahrzeugs (4) unter einer Randbedingung, dass die Geschwindigkeitstrajektorie (2) die festgelegte Maximalgeschwindigkeit (1) nicht überschreitet.

## Beschreibung

Die Erfindung betrifft ein Verfahren zum Optimieren eines Fahrbetriebs eines Kraftfahrzeugs. Die Erfindung betrifft ferner ein Kraftfahrzeug mit einer Benutzerschnittstelle zur Eingabe einer benutzerdefinierten Maximalgeschwindigkeit und einer Steuervorrichtung zur Bestimmung einer verbrauchsoptimierten Geschwindigkeitstrajektorie, die ausgebildet ist, das Verfahren durchzuführen.

Aus dem Stand der Technik sind Vorrichtungen und Verfahren zur Geschwindigkeitsregelung bekannt, welche die Motordrehzahl automatisch so regeln, dass das Fahrzeug eine vom Fahrer vorgegebene Geschwindigkeit nach Möglichkeit einhält (Tempopilot, engl.: cruise control). Hierbei kann über eine Benutzerschnittstelle eine Soll-Geschwindigkeit ein- bzw. vorgegeben werden. Eine geeignete Fahrzeugelektronik regelt den Fahrbetrieb auf die Sollgeschwindigkeit ein, so dass beispielsweise bei Auftreten von Steigungen die Motorleistung erhöht und bei Abwärtsfahrten die Motorleistung gedrosselt wird bzw. eine Bremswirkung über das Getriebe eingeleitet wird, um die Fahrgeschwindigkeit auf der Sollgeschwindigkeit konstant zu halten.

Nachteilig an derartigen Betriebsverfahren ist, dass hierbei keine ökonomischen oder ökologischen Aspekte, z. B. die Treibstoffeinsparung, bei der Geschwindigkeitsregelung berücksichtigt werden. So wird beispielsweise ein geübter Fahrer beim Heranfahren an eine Bergkuppe bereits vorab mit einkalkulieren, dass er die Bergkuppe in einer bestimmten Zeit überwunden haben wird und danach das Fahrzeug durch die Hangabtriebskraft wieder von alleine beschleunigt wird. In diesem Fall kann der Fahrer zur Energieeinsparung bereits vor Erreichen der Bergkuppe die Motorleistung reduzieren, um insgesamt Energie einzusparen.

Betriebsverfahren, die solche Fahrweisen automatisieren, sind ebenfalls aus dem Stand der Technik bekannt. Aus der DE 10 2005 050 540 A1 oder der DE 10 2008 035 944 A1 sind beispielsweise Betriebsverfahren bekannt, um eine verbrauchsoptimierte Geschwindigkeitstrajektorie entlang der Fahrtroute des Fahrzeugs zu bestimmen und den Fahrbetrieb des Fahrzeugs auf die bestimmte Geschwindigkeitstrajektorie einzuregeln.

Mit derartigen Verfahren zur Bestimmung einer optimierten Geschwindigkeitstrajektorie können insbesondere entlang der Fahrtroute variierende Geschwindigkeitsbegrenzungen berücksichtigt werden, soweit diese dem System bekannt sind, beispielsweise aus den Straßenkartendaten des Navigationsgeräts.

Nachteilig an den aus dem Stand der Technik bekannten Verfahren für die verbrauchsoptimierte Berechnung einer Geschwindigkeitstrajektorie ist jedoch, dass neue oder variable Geschwindigkeitsbegrenzungen, die dem System nicht bekannt sind, beispielsweise aufgrund von Baustellen, variablen Geschwindigkeitsanzeigen etc., nicht berücksichtigt werden. Folglich kann die Situation auftreten, dass das Fahrzeug auf eine Geschwindigkeitstrajektorie eingeregelt wird, die die aktuell herrschende Geschwindigkeitsbegrenzung nicht berücksichtigt und überschreitet.

Ferner besteht die Gefahr, dass bei Fahrzeugen, die nicht mit einem Abstandsradar und/ oder einer integrierten Längsregelung ausgestattet sind, Gefahrensituationen oder Auffahrunfälle entstehen können, falls die Fahrgeschwindigkeit durch eines der aus dem Stand der Technik bekannten verbrauchsoptimierten Geschwindigkeitsregelungen auf einen zu hohen Wert eingestellt wird, der für die aktuelle Verkehrssituation nicht angemessen ist. Dies könnte beispielsweise bei dichtem Verkehr, schlechten Witterungs- oder Fahrbahnbedingungen der Fall sein.

Es ist daher eine Aufgabe der Erfindung, ein Verfahren zur Optimierung des Fahrbetriebs eines Kraftfahrzeugs bereitzustellen, das Nachteile herkömmlicher Verfahren vermeidet. Das Verfahren soll insbesondere den Fahrbetrieb entlang einer verbrauchsoptimierten Geschwindigkeitstrajektorie ermöglichen und eine Flexibilität bereitstellen, um angemessen auf sich ändernde Verkehrssituationen reagieren zu können.

Die Aufgaben werden durch ein Verfahren zum Optimieren des Fahrbetriebs eines Kraftfahrzeugs mit den Merkmalen des Hauptanspruchs gelöst. Vorteilhafte Ausführungsformen und Anwendungen der Erfindung sind Gegenstand des nebengeordneten Anspruchs und der abhängigen Ansprüche und werden in der folgenden Beschreibung unter teilweiser Bezugnahme auf die Figuren näher erläutert.

Das erfindungsgemäß verwendete Verfahren zum Optimieren des Fahrbetriebs eines Kraftfahrzeugs umfasst die Bestimmung einer verbrauchsoptimierten Geschwindigkeitstrajektorie entlang einer vorbestimmten Fahrtroute des Fahrzeugs. Es wurde bereits vorstehend erwähnt, dass die Bestimmung einer verbrauchsoptimierten Geschwindigkeitstrajektorie an sich aus dem Stand der Technik bekannt ist und daher hier nicht näher beschrieben wird. An dieser Stelle ist lediglich zu erwähnen, dass derartige Verfahren, ausgehend von einer vorgegebenen Fahrtroute, die beispielsweise durch eine Navigationsvorrichtung bestimmt wird, das Höhenprofil entlang der Fahrtstrecke berücksichtigen können, um eine verbrauchsoptimierte Fahrbetriebssteuerung zu ermöglichen, um Kraftstoff und/oder Strom zu sparen. Die aus dem Stand der Technik bekannten Verfahren können ferner ausgebildet sein, entlang der Fahrtroute herrschende Höchstgeschwindigkeiten bei Ermittlung der verbrauchsoptimierten Geschwindigkeitstrajektorie zu berücksichtigen, so dass diese entlang der Fahrtroute eingehalten werden.

Darüber hinaus besteht im Rahmen der Erfindung die Möglichkeit, eine Maximalgeschwindigkeit für den aktuellen Fahrbetrieb mittels einer Eingabe über eine Benutzerschnittstelle festzulegen. Wird eine solche Maximalgeschwindigkeit über eine Eingabe der Benutzerschnittstelle vorgegeben, erfolgt eine Bestimmung der verbrauchsoptimierten Geschwindigkeitstrajektorie entlang der vorbestimmten Fahrtroute des Fahrzeugs unter der Randbedingung, dass die Geschwindigkeitstrajektorie entlang der verbleibenden Fahrtroute die benutzerdefinierte Maximalgeschwindigkeit nicht überschreitet. Das Verfahren umfasst weiter den Schritt der Regelung der Fahrgeschwindigkeit in Abhängigkeit von der bestimmten Geschwindigkeitstrajektorie, die unter der Maßgabe der eingegebenen benutzerdefinierten Maximalgeschwindigkeit bestimmt wurde.

Mit anderen Worten ermöglicht die vorliegende Erfindung dem Benutzer, jederzeit in die Regelung des Fahrbetriebs entlang der bestimmten Geschwindigkeitstrajektorie korrigierend einzugreifen, indem eine vom Benutzer eingegebene Maximalgeschwindigkeit als Vorgabe für die Bestimmung der optimierten Geschwindigkeitstrajektorie berücksichtigt wird, die alle etwaigen bisherigen Geschwindigkeitsbegrenzungen ersetzt oder "überschreibt", sofern diese über der eingegebenen Maximalgeschwindigkeit liegen.

Ein besonderer Vorzug der Erfindung liegt somit darin, dass ein automatisierter Fahrbetrieb mit einer Fahrzeugregelung entlang einer verbrauchsoptimierten Geschwindigkeitstrajektorie mit einer einfachen manuellen Eingriffsmöglichkeit für den Fahrer kombiniert werden kann, mit der der Benutzer auf aktuelle oder unvorhergesehene Verkehrssituationen, wie beispielsweise dichter Verkehr, Baustellengeschwindigkeitsbegrenzungen etc. reagieren kann. Dadurch kann in vielen Verkehrssituationen eine Deaktivierung der verbrauchsoptimierten Geschwindigkeitsregelung verhindert werden. Stattdessen kann die verbrauchsoptimierte Geschwindigkeitsregelung mittels einer manuellen Nutzereingabe an geänderte Fahrsituationen angepasst werden.

Vorzugsweise kann die Eingabe der Maximalgeschwindigkeit oder, falls bereits eine Maximalgeschwindigkeit von einem Benutzer eingegeben wurde, eine erneute Eingabe einer geänderten Maximalgeschwindigkeit an einer beliebigen Stelle entlang der Fahrtroute erfolgen. In diesem Fall wird eine vor der Eingabe der Maximalgeschwindigkeit bzw. eine vor der Eingabe der geänderten Maximalgeschwindigkeit bestimmte Geschwindigkeitstrajektorie nach der Eingabe erneut in Abhängigkeit von der eingegebenen bzw. geänderten Maximalgeschwindigkeit bestimmt.

Insbesondere kann dadurch die neu in Abhängigkeit der benutzerdefinierten Maximalgeschwindigkeit bestimmte Geschwindigkeitstrajektorie in einem unmittelbar vor Erreichen der eingegebenen Maximalgeschwindigkeit liegenden Abschnitt der Route eine niedrige Fahrgeschwindigkeit vorgegeben werden, als diejenige verbrauchsoptimierte Geschwindigkeitstrajektorie, die ohne oder in Abhängigkeit von einer höheren Maximalgeschwindigkeit bestimmt wird, in diesem Abschnitt vorgeben würde.

Die benutzerfestgelegte Maximalgeschwindigkeit wirkt sich somit gemäß dem erfindungsgemäßen Verfahren nicht nur auf den Bereich der zuvor bestimmten Geschwindigkeitstrajektorie aus, der vor Eingabe der Maximalgeschwindigkeit über der Maximalgeschwindigkeit lag. Vielmehr kann sich die benutzerfestgelegte Maximalgeschwindigkeit zumindest auch auf den Bereich der Geschwindigkeitstrajektorie auswirken, der in einem unmittelbar vor Erreichen der eingegebenen Maximalgeschwindigkeit liegenden Abschnitt der Route liegt, da der verbrauchsoptimierte Verlauf der Fahrgeschwindigkeit für die verbleibende Fahrtstrecke unter Berücksichtigung der benutzerdefinierten Maximalgeschwindigkeit neu berechnet wird, so dass der Bereich, wo die Maximalgeschwindigkeit erreicht wird, verbrauchsoptimal angefahren wird.

Dadurch können abrupte Geschwindigkeitsänderungen aufgrund der neu vorgegebenen Maximalgeschwindigkeit verhindert werden und stattdessen ein verrundeter Verlauf und eine möglichst gleichmäßige Änderung der Fahrgeschwindigkeit vorgegeben werden, um sowohl den Verbrauch als auch den Fahrkomfort zu verbessern.

Vorzugsweise wird die Benutzerschnittstelle zur Eingabe der Maximalgeschwindigkeit so ausgebildet, dass die Maximalgeschwindigkeit über ein oder mehrere im Fahrzeug angeordnete Bedienelemente oder Eingabemöglichkeiten eingebbar ist. Eine Möglichkeit der erfindungsgemäßen Realisierung sieht vor, dass die Maximalgeschwindigkeit über ein am Lenkrad angeordnetes Bedienelement eingebbar ist. Es wird jedoch betont, dass eine Eingabe der Maximalgeschwindigkeit auch über andere Benutzerschnittstellen, beispielsweise sprachgesteuert oder über ein an anderer Stelle des Cockpits oder der Mittelkonsole angeordnetes Bedienelement, möglich ist.

Gemäß einer besonders bevorzugten Ausgestaltungsform umfasst die Benutzerschnittstelle zur Eingabe der Maximalgeschwindigkeit eine Inkrementierungstaste und eine Dekrementierungstaste zur Erhöhung und Verringerung der Maximalgeschwindigkeit.

Gemäß einer vorteilhaften Variante dieser Ausgestaltungsform sind die Inkrementierungstaste und Dekrementierungstaste als Wippschalter ausgebildet. Durch mehrmaliges Betätigen der Inkrementierungs- und Dekrementierungstasten kann somit die Maximalgeschwindigkeit, beispielsweise ausgehend von einem praktikablen Geschwindigkeitsniveau, z. B. ausgehend von der aktuellen Fahrgeschwindigkeit, schrittweise erhöht oder verringert werden. Ferner können die Tasten so ausgebildet sein, dass durch ein anhaltendes Drücken der Inkrementierungstaste der Wert der einzugebenden Maximalgeschwindigkeit kontinuierlich erhöht wird, bis der Benutzer die Taste wieder loslässt. Die Inkrementierungstaste kann in analoger Weise eingerichtet sein.

Dadurch kann eine im Fahrbetrieb einfache und intuitiv bedienbare Eingabemöglichkeit bereitgestellt werden, die auch in kritischen Verkehrssituationen sicherstellt, dass der Benutzer die Maximalgeschwindigkeit einfach vorgeben kann, ohne zu stark durch den Eingabevorgang abgelenkt zu werden.

Eine weitere Ausführungsvariante sieht vor, dass die Benutzerschnittstelle zur Eingabe der Maximalgeschwindigkeit einen am Lenkrad angeordneten Bedienhebel umfasst, der in zwei entgegengesetzt gerichtete Stellungen betätigbar ist, um die Maximalgeschwindigkeit zu erhöhen bzw. zu erniedrigen.

Gemäß einer weiteren Ausführungsvariante kann die Benutzerschnittstelle eine Speichertaste umfassen, mit der eine gespeicherte Maximalgeschwindigkeit, beispielsweise die zuletzt eingegebene, aktiviert werden kann.

Ferner kann die Benutzerschnittstelle eine AUS-Taste umfassen, um eine festgelegte Maximalgeschwindigkeit zu deaktivieren. Nach Betätigen der AUS-Taste erfolgt eine Neubestimmung der verbrauchsoptimierten Geschwindigkeitstrajektorie ohne Maßgabe einer benutzerdefinierten Maximalgeschwindigkeit und anschließende Regelung auf die neubestimmte Geschwindigkeitstrajektorie.

Gemäß einem weiteren Aspekt können die vorgenannten Bedienelemente so ausgelegt sein, dass wenn im aktuellen Fahrzustand noch keine Maximalgeschwindigkeit eingegeben wurde oder die Benutzerschnittstelle länger als eine vorbestimmte Mindestzeitdauer nicht betätigt wurde, ein Betätigen der Inkrementierungstaste oder der Dekrementierungstaste die aktuelle Fahrgeschwindigkeit als Maximalgeschwindigkeit festlegt.

In dieser Ausführungsvariante kann die Benutzerschnittstelle so ausgelegt sein, dass eine anschließende erneute Betätigung der Inkrementierungstaste die Maximalgeschwindigkeit erhöht und eine erneute Betätigung der Dekrementierungstaste die Maximalgeschwindigkeit verringert.

Eine besonders vorteilhafte Ausführungsform sieht vor, dass die Maximalgeschwindigkeit über die Benutzerschnittstelle der Tempopilotregelung eingebbar ist. Beispielsweise kann eine Geschwindigkeitsregelung des Fahrzeugs in einem Tempopilot-Modus, bei dem die Fahrgeschwindigkeit möglichst konstant auf einer vorgegebenen Sollgeschwindigkeit gehalten wird, betrieben werden oder gemäß einer verbrauchsoptimierten Geschwindigkeitstrajektorie geregelt werden, wobei dieselbe Benutzerschnittstelle, z. B. dieselben Eingabetasten für die Festlegung der Sollgeschwindigkeit des Tempopilot-Modus und die Festlegung der Maximalgeschwindigkeit der verbrauchsoptimierten Geschwindigkeitsregelung, verwendet wird.

Dies ermöglicht eine platzsparende und einfach zu handhabende Benutzerschnittstelle für den Fahrer zur Geschwindigkeitseingabe. Beispielsweise können die bekannte Inkrementierungstaste, z. B. gelegentlich als "SET +"-Taste bezeichnet, und Dekrementierungstaste, z. B. "SET -"-Taste der Tempopilotregelung verwendet werden, sowie die "Speicher"- bzw. "MEM"-Taste oder die "AUS"- bzw. "OFF"-Taste, um eine Benutzerschnittstelle für die Eingabe der Maximalgeschwindigkeit auszubilden.

Ein weiterer Aspekt der Erfindung betrifft ein Kraftfahrzeug, insbesondere ein Nutzfahrzeug, umfassend eine Benutzerschnittstelle mit den Merkmalen der Benutzerschnittstelle, wie vorstehend beschrieben, und einer Steuervorrichtung zur Bestimmung einer verbrauchsoptimierten Geschwindigkeitstrajektorie, die ausgebildet ist, das Verfahren wie vorstehend beschrieben, durchzuführen.

Zur Vermeidung von Wiederholungen sollen rein verfahrensgemäß offenbarte Merkmale auch als vorrichtungsgemäß offenbart gelten und beanspruchbar sein, insbesondere betreffend die Benutzerschnittstelle und die Steuervorrichtung,.

Weitere Einzelheiten und Vorteile der Erfindung werden im Folgenden unter Bezug auf die beigefügten Zeichnungen beschrieben. Es zeigen:
- Figur 1: eine Geschwindigkeitstrajektorie und eine Fahrtroute im Höhenprofil ohne vorgegebene Maximalgeschwindigkeit;
- Figur 2: eine Geschwindigkeitstrajektorie und eine Fahrtroute im Höhenprofil mit festgelegter Maximalgeschwindigkeit gemäß einem Ausführungsbeispiel der Erfindung; und
- Figur 3: Eingabeelemente zur Festlegung der Maximalgeschwindigkeit gemäß einem Ausführungsbeispiel.

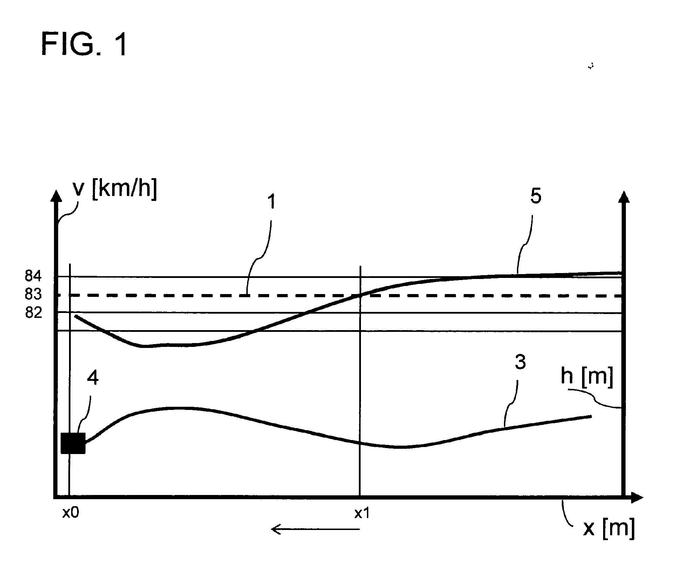

Figur 1 illustriert schematisch die Funktion eines an sich aus dem Stand der Technik bekannten Fahrgeschwindigkeitsreglers, der die Fahrgeschwindigkeit v entlang einer vorgegebenen Fahrtroute nach Maßgabe einer bestimmten verbrauchsoptimierten Geschwindigkeitstrajektorie, d.h. den Geschwindigkeitsverlauf entlang der Route, der zu einem optimalen Energieverbrauch des Fahrzeugs führt, regelt. Figur 1 zeigt hierzu eine Fahrtroute 3, wobei die x-Achse die zurückgelegte Fahrtstrecke, ausgehend von der aktuellen Position x0, hin zu einem Fahrziel darstellt. Die zugehörige Ordinate, rechts dargestellt, gibt den Höhenverlauf h in Metern der Fahrtroute an.

Die Fahrtroute 3 wurde beispielsweise durch eine Navigationsvorrichtung nach Maßgabe eines vom Benutzer eingestellten Start- und Zielortes ermittelt. In der Darstellung der Figur 1 befindet sich das Fahrzeug 4 an der Stelle x0. Wie durch die Kurvenverläufe in Figur 1 schematisch dargestellt, reduziert die verbrauchsoptimierte Geschwindigkeitstrajektorie 5 beispielsweise vor Erreichung einer Bergkuppe die Fahrgeschwindigkeit und beschleunigt unter Ausnutzung der Hangabtriebskraft bei einem Gefälle auf eine höhere Geschwindigkeit, um einen kraftstoffoptimierten Fahrbetrieb zu ermöglichen.

Die gestrichelte Linie 1 stellt eine vom Benutzer gewünschte Maximalgeschwindigkeit in Höhe von 83 km/h dar, die jedoch von der in Figur 1 gezeigten Geschwindigkeitstrajektorie nicht berücksichtigt wird. Daher überschreitet die Geschwindigkeitstrajektorie 5 die vom Nutzer gewünschte Maximalgeschwindigkeit 1 am Punkt x1.

Hat der Verkehr entlang der Fahrtroute beispielsweise stark zugenommen, kann es beispielsweise für den Fahrer wünschenswert sein, die Maximalgeschwindigkeit zu begrenzen, um ein zu dichtes Auffahren auf vorausfahrende Fahrzeuge zu verhindern.

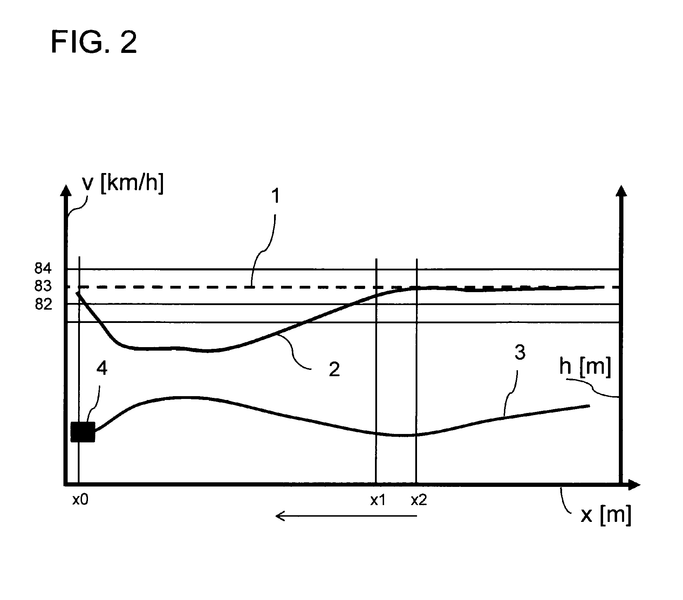

Der Fahrer wünscht somit beispielsweise die Vorgabe einer situationsangepassten Maximalgeschwindigkeit 1 von 83 km/h. Hierzu kann er gemäß dem in Figur 2 illustrierten Ausführungsbeispiel während der Fahrt über die vorgesehene Benutzerschnittstelle den Wert von 83 km/h für eine aktuell einzuhaltende Maximalgeschwindigkeit vorgeben.

Die erfindungsgemäß eingerichtete Steuervorrichtung erkennt die Eingabe einer benutzerdefinierten Maximalgeschwindigkeit und startet eine erneute Berechnung einer verbrauchsoptimierten Geschwindigkeitstrajektorie unter der Maßgabe, dass ausgehend von der aktuellen Fahrposition x0 bis zum Ziel die eingegebene Maximalgeschwindigkeit von 83 km/h nicht überschritten wird.

Die Berechnung der verbrauchsoptimierten Geschwindigkeitstrajektorie mit dieser neuen Randbedingung kann auf eine aus dem Stand der Technik bekannte Weise erfolgen, beispielsweise mittels in der DE 10 2005 050 540 A1 oder der DE 10 2008 035 944 A1 offenbarten Verfahren, indem beispielsweise die vom Benutzer eingegebene Maximalgeschwindigkeit so behandelt wird, dass auf der noch zurückzulegenden Route eine Höchstgeschwindigkeit von 83 km/h gilt, anstatt beispielsweise der sonst geltenden 100 km/h einer bestimmten Autobahn.

Der neu berechnete Verlauf der Geschwindigkeitstrajektorie 2 ist in Figur 2 dargestellt.

Es ist ersichtlich, dass die vom Benutzer eingegebene Maximalgeschwindigkeit 1 in Höhe von 83 km/h während des Fahrtverlaufs nicht überschritten wird. Es wird ferner betont, dass sich die Fahrgeschwindigkeit des Fahrzeugs 4 bereits vor dem Punkt x1 ändert, an dem der ursprüngliche Geschwindigkeitsverlauf 5 aus Figur 1 den Schwellwert von 83 km/h überschritten hätte. Der Bereich ist durch den nach links gerichteten Pfeil in Fig. 1 illustriert. Der Grund hierfür ist, dass der verbrauchsoptimierte Geschwindigkeitsverlauf unter Berücksichtigung der Maximalgeschwindigkeit von 83 km/h derjenige ist, der bereits vor Erreichen der Maximalgeschwindigkeit die Fahrgeschwindigkeit reduziert, um nicht durch ein zu abruptes Abbremsen Antriebsenergie zu vergeuden. Im Unterschied zur Figur 1 erreicht somit der modifizierte Geschwindigkeitsverlauf 2 erst im Punkt x2 die vorgegebene Maximalgeschwindigkeit 1 in Höhe von 83 km/h.

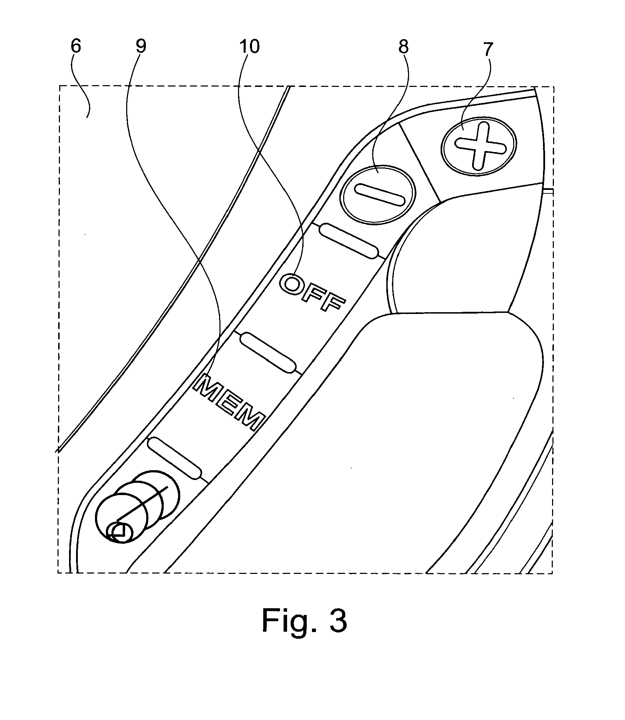

Figur 3 illustriert beispielhaft eine Benutzerschnittstelle zur einfachen Eingabe der Maximalgeschwindigkeit.

Hierbei wird eine aus dem Stand der Technik bekannte Bedienvorrichtung für die Tempopilotregelung genutzt. Hierbei ist an einem Lenkrad 6, das nur ausschnittsweise dargestellt ist, eine Anordnung aus einer Inkrementierungstaste 7, einer Dekrementierungstaste 8, einer Speichertaste 9 und einer AUS-Taste 10 angeordnet. Ist im aktuellen Fahrbetrieb keine benutzervorgegebene Maximalgeschwindigkeit gesetzt, kann durch das erstmalige Betätigen einer der Tasten 7 bis 9 die aktuelle Fahrgeschwindigkeit als Ausgangswert für die Maximalgeschwindigkeit gesetzt werden. Wünscht der Fahrer eine andere Maximalgeschwindigkeit, kann er durch wiederholtes Betätigen der Inkrementierungstaste 7 oder der Dekrementierungstaste 8 diese schrittweise erhöhen oder verringern. Alternativ kann er durch Betätigen der Memory-Taste 9 eine zuletzt gültige Maximalgeschwindigkeit wieder aktivieren.

Nach dem Hochsetzen der Maximalgeschwindigkeit erfolgt ein Beschleunigen beispielsweise erst dann, wenn der autonome Geschwindigkeitsregler dies auslöst, um eine verbrauchsoptimale Geschwindigkeitssteuerung zu ermöglichen. Der Benutzer kann jedoch zu jedem Zeitpunkt entlang der Fahrtroute die aktuelle Maximalgeschwindigkeit verändern oder gegebenenfalls deaktivieren. Nach einer Veränderung oder Deaktivierung der Maximalgeschwindigkeit startet der autonome Geschwindigkeitsregler eine Neuberechnung der zielgrößenoptimierten Geschwindigkeitstrajektorie für die verbleibende Fahrtstrecke. Es wird ferner festgestellt, dass die maximale Fahrgeschwindigkeit des Fahrzeugs durch andere Faktoren weiter heruntergesetzt werden kann, falls beispielsweise die gesetzliche Höchstgeschwindigkeit im aktuellen Streckenabschnitt unterhalb der eingegebenen benutzerdefinierten Maximalgeschwindigkeit liegt, sie kann aber nicht über die Fahrervorgabe hinaus erhöht werden.

Ein Drücken der OFF-Taste 10 deaktiviert die vorgegebene Maximalgeschwindigkeit und der Geschwindigkeitsregler ermittelt eine Geschwindigkeitstrajektorie gemäß den sonstigen Vorgaben der Fahrtroute, beispielsweise unter Berücksichtigung der entlang der Routenabschnitte herrschenden Höchstgeschwindigkeiten.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Insbesondere kann die Ausgestaltung der Benutzerschnittstelle zur Eingabe der Maximalgeschwindigkeit verschieden ausgestaltet sein. Folglich soll die Erfindung ferner nicht auf das Offenbarte bestimmter Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Maximalgeschwindigkeit
- 2: verbrauchsoptimierte Geschwindigkeitstrajektorie unter Berücksichtigung der benutzerdefinierten Maximalgeschwindigkeit
- 3: Fahrtstrecke in Höhenprofildarstellung
- 4: Fahrzeug
- 5: verbrauchsoptimierte Geschwindigkeitstrajektorie ohne benutzerdefinierte Maximalgeschwindigkeit
- 6: Lenkrad
- 7: Inkrementierungstaste
- 8: Dekrementierungstaste
- 9: Speichertaste
- 10: AUS-Taste
- 11: Bedienelement
- x0: aktuelle Fahrposition
- x1: Erreichen der Maximalgeschwindigkeit mit herkömmlicher Geschwindigkeitstrajektorie
- x2: Erreichen der Maximalgeschwindigkeit mit erfindungsgemäßer Geschwindigkeitstrajektorie

## Patentansprüche

1. Verfahren zum Optimieren eines Fahrbetriebs eines Kraftfahrzeugs (4), umfassend die folgenden Schritte:
Festlegen einer Maximalgeschwindigkeit (1) für den Fahrbetrieb (4) mittels einer Eingabe über eine Benutzerschnittstelle; und
Bestimmen einer verbrauchsoptimierten Geschwindigkeitstrajektorie (2) entlang einer vorbestimmten Fahrtroute (3) des Fahrzeugs (1) unter einer Randbedingung, dass die Geschwindigkeitstrajektorie (2) die festgelegte Maximalgeschwindigkeit (1) nicht überschreitet.

2. Verfahren nach Anspruch 1, **dadurch gekennzeichnet,**
(a) **dass** die Eingabe der Maximalgeschwindigkeit (1) oder eine erneute Eingabe einer geänderten Maximalgeschwindigkeit an einer beliebigen Stelle entlang der Fahrtroute (3) möglich ist; und
(b) **dass** eine vor der Eingabe der Maximalgeschwindigkeit bzw. der geänderten Maximalgeschwindigkeit bestimmte Geschwindigkeitstrajektorie (5) nach der Eingabe erneut in Abhängigkeit der eingegebenen Maximalgeschwindigkeit (1) bestimmt wird.

3. Verfahren nach Anspruch 1 oder 2, **dadurch gekennzeichnet, dass** die Geschwindigkeitstrajektorie (2) in einem unmittelbar vor Erreichen der eingegebenen Maximalgeschwindigkeit (1) liegenden Abschnitt der Route eine niedrigere Fahrgeschwindigkeit (v) vorgibt als eine Geschwindigkeitstrajektorie (5) in diesem Abschnitt, die ohne oder in Abhängigkeit einer höheren Maximalgeschwindigkeit bestimmt wird.

4. Verfahren nach einem der vorhergehenden Ansprüche, **dadurch gekennzeichnet, dass** die Maximalgeschwindigkeit (1) über ein oder mehrere im Fahrzeug angeordnete Bedienelemente oder Eingabemöglichkeiten eingebbar ist.

5. Verfahren nach Anspruch 4, **dadurch gekennzeichnet, dass** das Bedienelement (11) am Lenkrad (6) angeordnet ist.

6. Verfahren nach einem der vorhergehenden Ansprüche, **dadurch gekennzeichnet,**
(a) **dass** die Benutzerschnittstelle zur Eingabe der Maximalgeschwindigkeit (1) eine Inkrementierungstaste (7) und eine Dekrementierungstaste (8) zur Erhöhung und Verringerung der Maximalgeschwindigkeit (1) umfasst; oder
(b) **dass** die Benutzerschnittstelle zur Eingabe der Maximalgeschwindigkeit (1) einen Bedienhebelschalter umfasst, der in eine erste Stellung zur Erhöhung und in eine zweite Stellung zur Verringerung der Maximalgeschwindigkeit (1) betätigbar ist.

7. Verfahren nach einem der Ansprüche 4 bis 6, **dadurch gekennzeichnet, dass** die Benutzerschnittstelle umfasst:
(a) eine Speicher-Taste (9), die mit einer Maximalgeschwindigkeit (1) belegbar ist, so dass ein Betätigen der Speicher-Taste (9) die Maximalgeschwindigkeit festlegt und/oder
(b) eine AUS-Taste (10), um eine festgelegte Maximalgeschwindigkeit (1) zu deaktivieren.

8. Verfahren nach Anspruch 6 oder 7, **dadurch gekennzeichnet, dass** wenn im aktuellen Fahrzustand noch keine Maximalgeschwindigkeit eingegeben wurde oder die Benutzerschnittstelle länger als eine vorbestimmte Mindestzeitdauer nicht betätigt wurde, ein Betätigen der Inkrementierungstaste (7) oder der Dekrementierungstaste (8) die aktuelle Fahrgeschwindigkeit (v) als Maximalgeschwindigkeit (1) festlegt.

9. Verfahren nach Anspruch 8, **dadurch gekennzeichnet, dass** nach Festlegung der Maximalgeschwindigkeit (1) eine erneute Betätigung der Inkrementierungstaste (7) die Maximalgeschwindigkeit (1) erhöht und eine erneute Betätigung der Dekrementierungstaste (8) die Maximalgeschwindigkeit verringert.

10. Verfahren nach einem der vorhergehenden Ansprüche, **dadurch gekennzeichnet, dass** die Maximalgeschwindigkeit (1) über die Benutzerschnittstelle der Tempopilotregelung festlegbar ist, mittels der eine vom Fahrer vorgegebenen Sollgeschwindigkeit eingebbar ist, auf die die Tempopilotregelung den Fahrbetrieb einregelt.

11. Kraftfahrzeug, insbesondere Nutzfahrzeug, umfassend
(a) eine Benutzerschnittstelle mit den Merkmalen einer Benutzerschnittstelle gemäß einem der Ansprüche 4 bis 10; und
(b) eine Steuervorrichtung zur Bestimmung einer verbrauchsoptimierten Geschwindigkeitstrajektorie, die ausgebildet ist, das Verfahren nach einem der Ansprüche 1 bis 10 durchzuführen.
